# EUROPEAN PATENT APPLICATION

(11) **EP 4 845 132 A1**
(43) Date of publication of application: **25.11.2026**
(21) Application number: 26179807.8
(22) Date of filing: 20.05.2026
(51) Int. Cl.: H04M 1/02, G06F 1/16

(54) **CASE FOR A MOBILE DEVICE AND METHOD OF MANUFACTURING SAME**

(30) Priority: 20.05.2025 GB 202507875
(71) Applicant: Mous Products Ltd., London E2 8JF (GB)
(72) Inventor: Driessen, Jasper, London, E2 8JF (GB); Atherton, Nicholas James, London, E2 8JF (GB); Holroyd, Simon, London, E2 8JF (GB); Tang, Jonathan James, London, E2 8JF (GB)
(74) Representative: EIP

(57) **Abstract**

Disclosed is a case for a mobile device, the case having a height, a width that is perpendicular to the height, and a depth that is perpendicular to, and smaller than, both the height and the width. A side portion of the case comprises a first side portion part and a second side portion part that has been over-moulded onto the first side portion part so that the second side portion part is fixed to the first side portion part. The first side portion part is stiffer than the second side portion part and comprises a frame defining a hole in the first side portion part that opens to an exterior of the first side portion part, wherein the frame is non-adhesively retained in position by at least one of the first side portion part and the second side portion part. A first side region of the side portion on a first side of the frame, in the direction of the one of the height and the width, is less stiff than a frame region of the side portion that comprises the frame. Also disclosed is a method of manufacturing a case for a mobile device.

## Description

### TECHNICAL FIELD

The present invention relates to cases for mobile devices.

### BACKGROUND

A case for a mobile device must enable use of control buttons on the mobile device when the mobile device is contained by the case. Such control buttons are typically enclosed by the case to inhibit ingress of contaminants and/or to protect the control buttons from impact forces. In some instances, a control button is useable to provide different commands to the mobile device, based on different user inputs provided via the control button. A case for a mobile device can reduce the detection accuracy of such different user inputs by the mobile device, which may be unsatisfactory to a user.

### SUMMARY

A first aspect of the invention provides a case for a mobile device, the case having a height, a width that is perpendicular to the height, and a depth that is perpendicular to, and smaller than, both the height and the width. The case comprises: a rear portion that lies in a first plane defined by the height and the width, wherein the rear portion is configured to at least partially overlie a rear of the mobile device when the case is attached to the mobile device; and a side portion that depends from the rear portion and lies in a second plane defined by the depth and one of the height and the width, wherein the side portion is configured to at least partially overlie a side of the mobile device when the case is attached to the mobile device. The side portion comprises a first side portion part and a second side portion part that has been over-moulded onto the first side portion part so that the second side portion part is fixed to the first side portion part. The first side portion part is stiffer than the second side portion part and comprises a frame defining a hole in the first side portion part that opens to an exterior of the first side portion part, wherein the frame is non-adhesively retained in position relative to the rear portion by at least one of the first side portion part and the second side portion part, and a first side region of the side portion on a first side of the frame, in the direction of the one of the height and the width, is less stiff than a frame region of the side portion that comprises the frame.

The hole being defined by the frame of the first side portion part, rather than by the less stiff second side portion part, may better ensure that the shape of the hole is retained during manufacture of the case, as well as when the side portion is subjected to an impact during use of the case. As a result, anything to be retained in the hole, such as a mobile-device-interface control panel that is configured to be operable by a user to control a mobile device interface of the mobile device when the case is attached to the mobile device, may be better retained and protected in the hole.

The frame being non-adhesively retained in position relative to the rear portion by at least one of the first side portion part and the second side portion part means that the frame is retained in position relative to the rear portion in an adhesive-free manner, so that no adhesive is used to retain the frame in position relative to the rear portion. Avoiding the use of adhesive in this way may simplify assembly of the case. Additionally, or alternatively, avoiding the use of adhesive in this way may help to avoid adhesive reaching undesirable locations, such as onto an area of the side portion that is exposed at the exterior of the case or onto the mobile device when the case is attached to the mobile device. Additionally, or alternatively, avoiding the use of adhesive in this way may facilitate disassembly of the case when the case is to be recycled.

The first side region being less stiff than the frame region may help the case to better cushion the mobile device when the case is attached to the mobile device than a comparative case in which the first side region is at least as stiff as the frame region.

Optionally, the frame extends only partially along a full extent of the side portion in the direction of the one of the height and the width, and a portion of the frame is located further from the first plane than is any section of the first side portion part present in the first side region. As a result, the first side portion part may be less likely to resist deformation of the side portion in the first side region than a comparative case in which a section of the first side portion part present in the first side region is located at least as far from the first plane as is the portion of the frame. Accordingly, this may help the first side region of the case to better cushion the mobile device when the case is attached to the mobile device.

Optionally, the frame extends less than a half, or less than a quarter, of the full extent of the side portion in the direction of the one of the height and the width.

Optionally, a second side region of the side portion on a second side of the frame, in the direction of the one of the height and the width, is less stiff than the frame region of the side portion. The second side region being less stiff than the frame region may help the case to better cushion the mobile device when the case is attached to the mobile device than a comparative case in which the second side region is at least as stiff as the frame region.

Optionally, the portion of the frame is located further from the first plane than is any section of the first side portion part present in the second side region. As a result, the first side portion part may be less likely to resist deformation of the side portion in the second side region than a comparative case in which a section of the first side portion part present in the second side region is located at least as far from the first plane as is the portion of the frame. Accordingly, this may help the second side region of the case to better cushion the mobile device when the case is attached to the mobile device.

Optionally, the second side portion part extends over a greater proportion of the side portion than does the first side portion part. As a result, the first side portion part may be less likely to resist deformation of the side portion than a comparative case in which the first side portion part extends over at least as great a proportion of the side portion as does the second side portion part. Accordingly, this may help the side portion of the case to better cushion the mobile device when the case is attached to the mobile device.

Optionally, the width is smaller than the height.

Optionally, the second plane is orthogonal to the first plane. Optionally, the second plane is defined by the depth and the height.

Optionally, the second side portion part is formed from a material with a lower Young's modulus than a material from which the first side portion part is formed.

Optionally, the first side portion part is formed from a polymer, such as a polycarbonate (PC). Optionally, the second side portion part is formed from a polymer, such as a thermoplastic polyurethane (TPU).

Optionally, the hole is obround shaped. An obround shape, in geometry, refers to a plane shape consisting of two semicircles connected by parallel lines tangent to their endpoints. Other names for an obround include stadium and discorectangle. An obround-shaped hole may distribute forces more evenly around its perimeter than may do a polygonal hole, which in turn may help to reduce or avoid local stress concentrations that could lead to fatigue and cracks forming in the first side portion part.

Optionally, the case comprises a plurality of side portions that depend from the rear portion and are configured to at least partially overlie respective sides of the mobile device when the case is attached to the mobile device, wherein the side portion is one of the plurality of side portions. The provision of such a plurality of side portions may help to better protect the mobile device from damage when the case is attached to the mobile device. The plurality of side portions may comprise, or consist of, four side portions.

Optionally, the case comprises a through hole that extends through the side portion from an interior of the case to an environment external to the case, wherein the through hole comprises, or consists of, the hole defined by the frame of the first side portion part, wherein the interior of the case is at least partially defined by the rear portion and the side portion, and wherein the environment external to the case is on an opposite side of the side portion from the interior of the case. The through hole may enable access to the mobile device when the case is attached to the mobile device, either from the environment external to the case or by anything to be retained in the hole, such as a mobile-device-interface control panel that is configured to be operable by a user to control a mobile device interface of the mobile device when the case is attached to the mobile device. Accordingly, this may facilitate operation of the mobile device when the case is attached to the mobile device.

Optionally, the interior of the case is at least partially defined by the rear portion and the plurality of side portions (when present). In some examples, the through hole consists of the hole defined by the frame so that the through hole is defined solely by the first side portion part. In other examples, the through hole comprises the hole defined by the frame and a further hole defined by the second side portion part and aligned with the hole defined by the frame, so that the through hole is defined by a combination of the first side portion part and the second side portion part.

Optionally, the second side portion part is over-moulded on to the rear portion around a periphery of the rear portion, and the rear portion is stiffer than the second side portion part. This may improve a robustness of the case and/or simplify manufacture of the case.

Optionally, the second side portion part is formed from a material with a lower Young's modulus than a material from which the rear portion is formed.

Optionally, the rear portion is formed from a polymer, such as a polycarbonate (PC). Optionally, the second side portion part is formed from a polymer, such as a thermoplastic polyurethane (TPU).

Optionally, the first side portion part is unitary with the rear portion. This may improve a robustness of the case and/or simplify manufacture of the case.

Optionally, the first side portion part is nonunitary with the rear portion. This may allow a greater proportion of the side portion to be formed by the less stiff second side portion part than in a comparative example in which the first side portion part is unitary with the rear portion. Accordingly, the side portion may better absorb energy when the side portion is subjected to an impact during use of the case, which in turn may better protect the mobile device from damage when the case is attached to the mobile device.

Optionally, the first side portion part is separated from the rear portion by material of the second side portion part. This may improve a robustness of the case as compared to an example whereby the first side portion part is separated from the rear portion by a gap or space.

Optionally, the first side portion part defines one or more first dovetails, and wherein the second side portion part defines one or more second dovetails interlocked respectively with the one or more first dovetails. This may help to retain the first side portion part, and the hole, relative to the second side portion part. In turn, this may help to retain anything to be retained in the hole, such as a mobile-device-interface control panel that is configured to be operable by a user to control a mobile device interface of the mobile device when the case is attached to the mobile device, relative to the second side portion part and, in some examples, relative to most or all of a remainder of the case.

Optionally, the first side portion part defines one or more secondary through holes, and wherein the second side portion part includes one or more regions located respectively in the one or more secondary through holes. This may help to retain the first side portion part, and the hole, relative to the second side portion part. In turn, this may help to retain anything to be retained in the hole, such as a mobile-device-interface control panel that is configured to be operable by a user to control a mobile device interface of the mobile device when the case is attached to the mobile device, relative to the second side portion part and, in some examples, relative to most or all of a remainder of the case.

Optionally, the frame is unencapsulated by the second side portion part. The frame being unencapsulated by the second side portion part may enable the hole to have more predictable, or more controlled, dimensions on manufacture, since the dimensions of the hole are dictated by the stiffer first side portion part and not influenced by the less stiff second side portion part or the extent to which the second side portion part is over-moulded onto the first side portion part. As a result, anything to be retained in the hole, such as a mobile-device-interface control panel that is configured to be operable by a user to control a mobile device interface of the mobile device when the case is attached to the mobile device, may be better retained in the hole. Additionally, or alternatively, the frame being unencapsulated by the second side portion part may reduce a risk of the second side portion part obscuring, from an environment external to the case, anything to be retained in the hole, such as such a mobile-device-interface control panel.

Optionally, an exterior of the frame is covered by the second side portion part. Alternatively, the exterior of the frame is not covered by the second side portion part.

Optionally, a wall of the hole comprises at least two projections of the first side portion part that project towards each other in the hole for mechanically retaining something in the hole, wherein the projections are unencapsulated by the second side portion part. These projections being unencapsulated in this way may enable the projections to more fixedly retain the "something", such as a mobile-device-interface control panel that is configured to be operable by a user to control a mobile device interface of the mobile device when the case is attached to the mobile device, in the hole, than in a comparative example in which the projections are encapsulated by the less stiff second side portion part.

Optionally, the second side portion part is attached to the first side portion part in an adhesive-free manner. Avoiding the use of adhesive between the first side portion part and the second side portion part may simplify assembly of the case. Additionally, or alternatively, avoiding the use of adhesive may help to avoid adhesive reaching undesirable locations, such as onto an area of the side portion that is exposed at the exterior of the case or onto the mobile device when the case is attached to the mobile device. Additionally, or alternatively, avoiding the use of adhesive may facilitate removal of the second side portion part from the first side portion part when the case is to be recycled.

Optionally, the case comprises a mobile-device-interface control panel in the hole defined by the frame, wherein the mobile-device-interface control panel is exposed at an exterior of the case and configured to be operable by a user to control a mobile device interface of the mobile device when the case is attached to the mobile device. The mobile-device-interface control panel being in the hole defined by the frame may be better retained in the hole than if the hole were instead defined by the less stiff second side portion part. This, combined with the mobile-device-interface control panel being exposed at the exterior of the case, may facilitate a user's operation of the mobile-device-interface control panel and, therefore, a user's operation of the mobile device interface of the mobile device when the case is attached to the mobile device.

Optionally, the rear portion is configured to overlie all of the rear face, or faces (such as in examples in which the mobile device is foldable), of the mobile device. This may provide improved protection of the rear face, or faces, of the mobile device compared to the rear portion covering only part of the rear face(s). Optionally, the rear portion is configured to overlie just one or more sections of the rear face(s) of the mobile device. This may provide a less bulky case compared to a case in which the rear portion covers all of the rear face(s). Optionally, the rear portion forms a lip around at least part of a periphery of the rear face of the mobile device, for example such that the rear panel defines a window through which some of the rear face of the mobile device may be visible when the case is on the mobile device. The case may thus be a bumper style case in which a majority of the rear face(s) of the mobile device are not covered by the case.

Optionally, the side portion is configured to overlie all of the side face of the mobile device. This may provide improved protection of the side face of the mobile device compared to the side portion covering only part of the side face. Optionally, the side portion is configured to overlie just one or more sections of the side face of the mobile device. This may provide a less bulky case compared to a case in which the side portion covers all of the side face.

A second aspect of the present invention provides a kit of parts comprising a case according to the first aspect, and a mobile-device-interface control panel that is separate from the case and locatable in the hole defined by the frame. The mobile-device-interface control panel is configured to be exposed at an exterior of the case and operable by a user to control a mobile device interface of the mobile device when the mobile-device-interface control panel is in the hole and the case is attached to the mobile device.

The mobile-device-interface control panel being separate from the case may facilitate manufacture of the kit of parts, as a user may perform the final assembly of the kit of parts.

Optionally, with regard to the first aspect or the second aspect, the mobile-device-interface control panel and the side portion are configured so that the mobile-device-interface control panel is held in the hole by an adhesive-free retention mechanism. Avoiding the use of adhesive between the mobile-device-interface control panel and the side portion may simplify assembly of the case. Additionally, or alternatively, avoiding the use of adhesive may help to avoid adhesive reaching undesirable locations, such as onto an area of the mobile-device-interface control panel that is exposed at the exterior of the case, onto an area of the side portion that is exposed at the exterior of the case, or onto the mobile device when the case is attached to the mobile device. Additionally, or alternatively, avoiding the use of adhesive in this way may facilitate removal of the mobile-device-interface control panel from the hole when the case is to be recycled or if the mobile-device-interface control panel is to be replaced.

Optionally, with regard to the first aspect or the second aspect, the mobile-device-interface control panel and the side portion are configured so that the mobile-device-interface control panel is held in the hole by a mechanical retention mechanism. This may enable the mobile-device-interface control panel to be held in the hole in the side portion without the use of an adhesive. Avoiding the use of an adhesive may provide any one or more of the effects or benefits noted above. This may enable the mobile-device-interface control panel to be held in the hole in the side portion without the use of an adhesive. Avoiding the use of an adhesive may provide any one or more of the effects or benefits noted above.

Optionally, with regard to the first aspect or the second aspect, the mobile-device-interface control panel and the side portion are configured so that the mobile-device-interface control panel is held in the hole by way of a friction fit or a snap fit between the mobile-device-interface control panel and the side portion. This may enable the mobile-device-interface control panel to be held in the hole in the side portion without the use of an adhesive. Avoiding the use of an adhesive may provide any of the effects or benefits noted above.

Optionally, with regard to the first aspect or the second aspect, the mobile-device-interface control panel comprises a printed circuit board and a protective layer that overlies the printed circuit board, wherein the mobile-device-interface control panel and the side portion are configured so that, when the mobile-device-interface control panel is in the hole and the case is attached to the mobile device, the protective layer isolates the printed circuit board from an environment external to the case. The protective layer may therefore help to separate the printed circuit board from the user's finger in use, which in turn may help to protect the printed circuit board from damage.

Optionally, the protective layer comprises one or more materials selected from: sapphire crystal, glass and polycarbonate.

A third aspect of the present invention provides a system comprising a case according to the first aspect, or a kit of parts according to the second aspect, and the mobile device. Providing the case, or the kit of parts, as a system with the mobile device may be convenient for a user. For example, if the user owns or has access to several mobile devices and/or cases, they may be able to readily identify that the case is attachable to the mobile device.

Optionally, the system is provided with the case attached to the mobile device. Alternatively, the system may be provided with the case unattached, but attachable, to the mobile device. Still further alternatively, the system may be provided with the kit of parts unassembled and separate from the mobile device.

Optionally, the mobile device is a mobile communications device, such as a mobile telephone (also known as a cell phone).

A fourth aspect of the present invention provides a method of manufacturing a case for a mobile device, the case having a height, a width that is perpendicular to the height, and a depth that is perpendicular to, and smaller than, both the height and the width. The method comprises: providing a rear portion that lies in a first plane defined by the height and the width, wherein the rear portion is configured to at least partially overlie a rear of the mobile device when the case is attached to the mobile device; providing a side portion that depends from the rear portion and lies in a second plane defined by the depth and one of the height and the width, wherein the side portion is configured to at least partially overlie a side of the mobile device when the case is attached to the mobile device. The providing the side portion comprises: providing a first side portion part that comprises a frame defining a hole therein that opens to an exterior of the first side portion part; over-moulding a second side portion part onto the first side portion part so that the second side portion part is fixed to the first side portion part, wherein the first side portion part is stiffer than the second side portion part; non-adhesively retaining the frame in position relative to the rear portion by at least one of the first side portion part and the second side portion part; and providing that a first side region of the side portion on a first side of the frame, in the direction of the one of the height and the width, is less stiff than a frame region of the side portion that comprises the frame.

Optionally, the providing the first side portion part comprises moulding the first side portion part.

Optionally, the providing the side portion comprises providing the side portion so that the frame extends only partially along a full extent of the side portion in the direction of the one of the height and the width, and a portion of the frame is located further from the first plane than is any section of the first side portion part present in the first side region.

Optionally, the providing the side portion comprises providing the side portion so that the frame extends less than a half, or less than a quarter, of the full extent of the side portion in the direction of the one of the height and the width.

Optionally, the providing the side portion comprises providing the side portion so that a second side region of the side portion on a second side of the frame, in the direction of the one of the height and the width, is less stiff than the frame region of the side portion.

Optionally, the portion of the frame is located further from the first plane than is any section of the first side portion part present in the second side region.

Optionally, the providing the side portion comprises providing the side portion so that the second side portion part extends over a greater proportion of the side portion than does the first side portion part.

Optionally, the method comprises providing (e.g., moulding) a plurality of side portions that depend from the rear portion and are configured to at least partially overlie respective sides of the mobile device when the case is attached to the mobile device, wherein the side portion is one of the plurality of side portions.

Optionally, the providing the side portion comprises providing the side portion with a through hole that extends through the side portion from an interior of the case to an environment external to the case, wherein the through hole comprises, or consists of, the hole defined by the frame of the first side portion part, wherein the interior of the case is at least partially defined by the rear portion and the side portion, and wherein the environment external to the case is on an opposite side of the side portion from the interior of the case.

Optionally, the interior of the case is at least partially defined by the rear portion and the plurality of side portions (when present).

Optionally, the providing the side portion comprises overmoulding the second side portion part onto the rear portion around a periphery of the rear portion, wherein the rear portion is stiffer than the second side portion part.

Optionally, the providing the rear portion and the providing the side portion comprise making the first side portion part unitary with the rear portion. Alternatively, the providing the rear portion and the providing the side portion comprise making the first side portion part nonunitary with the rear portion.

Optionally, the providing the rear portion and the providing the side portion comprise ensuring that the first side portion part is separated from the rear portion by material of the second side portion part.

Optionally, the providing the side portion comprises providing the first side portion part so that the first side portion part defines one or more first dovetails, and over-moulding the second side portion part onto the first side portion part so that the second side portion part defines one or more second dovetails interlocked respectively with the one or more first dovetails.

Optionally, the providing the side portion comprises providing the first side portion part so that the first side portion part defines one or more secondary through holes, and over-moulding the second side portion part onto the first side portion part so that the second side portion part includes one or more regions located respectively in the one or more secondary through holes.

Optionally, the over-moulding the second side portion part onto the first side portion part comprises over-moulding the second side portion part onto the first side portion part so that the frame is unencapsulated by the second side portion part.

Optionally, the providing the side portion comprises providing the first side portion part so that a wall of the hole comprises at least two projections of the first side portion part that project towards each other in the hole for mechanically retaining something in the hole, and the over-moulding the second side portion part onto the first side portion part comprises over-moulding the second side portion part onto the first side portion part so that the projections are unencapsulated by the second side portion part.

Optionally, the over-moulding the second side portion part onto the first side portion part comprises attaching the second side portion part to the first side portion part in an adhesive-free manner.

Optionally, the method comprises locating a mobile-device-interface control panel in the hole defined by the frame, wherein the mobile-device-interface control panel is exposed at an exterior of the case and configured to be operable by a user to control a mobile device interface of the mobile device when the case is attached to the mobile device.

Optionally, the mobile-device-interface control panel comprises a printed circuit board and a protective layer that overlies the printed circuit board, wherein the mobile-device-interface control panel and the side portion are configured so that, when the mobile-device-interface control panel is in the hole and the case is attached to the mobile device, the protective layer isolates the printed circuit board from an environment external to the case.

Optional features of aspects of the present invention may be equally applied to other aspects of the present invention, where appropriate.

### BRIEF DESCRIPTION OF THE DRAWINGS

Figure 1 is a system according to an example, comprising a mobile device and a case for the mobile device;
Figures 2 is an exploded view of the case of Figure 1;
Figures 3a and 3c are partial views of a first side portion part of the case of Figure 1;
Figures 3b and 3d are partial views of a side portion of the case of Figure 1;
Figure 4 is a cross-sectional view of the first side portion part of Figures 3a and 3c;
Figure 5 is a cross-sectional view of the side portion of Figures 3b and 3d;
Figure 6 is an exploded view of a case for a mobile device according to another example;
Figure 7 is a perspective view of a first side portion part of the case of Figure 6;
Figures 8a-b are partial views of a side portion of the case of Figure 6;
Figure 9 is a cross-sectional view of the side portion of Figures 8a-b; and
Figure 10 is a method according to an example.

### DETAILED DESCRIPTION

Described here are example cases for a mobile device and a method for manufacturing such cases. The cases comprise a button and button casing. The button is configured to transfer a user input from an exterior of the case to a button of the mobile device contained within the case. The button casing is generally stiffer than material typically used for cases for a mobile device, which can cause case warping and result in reduced performance of the case and/or the button. Cases according to the disclosure seek to reliably locate and protect the button, whilst maintaining sufficient control input detection, impact protection and contaminant-ingress resistance.

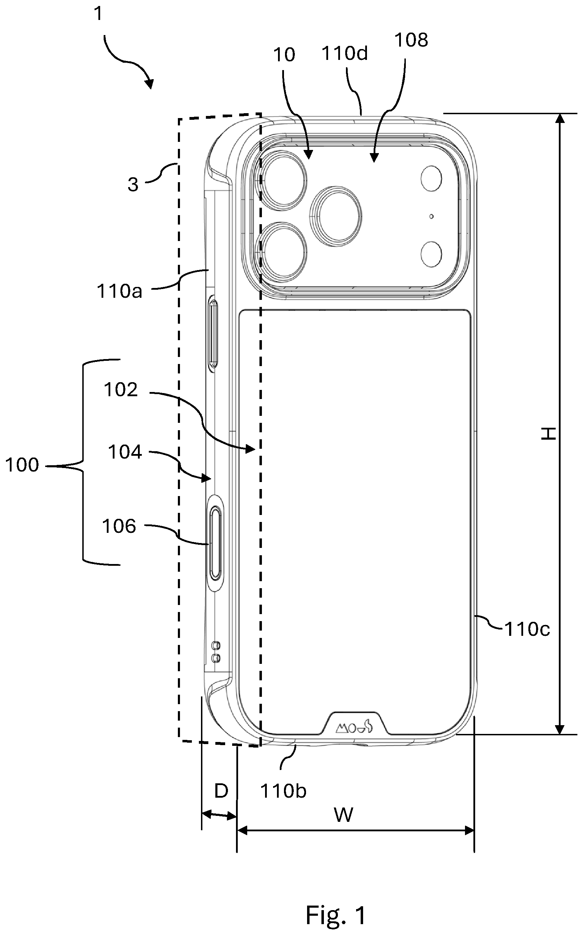

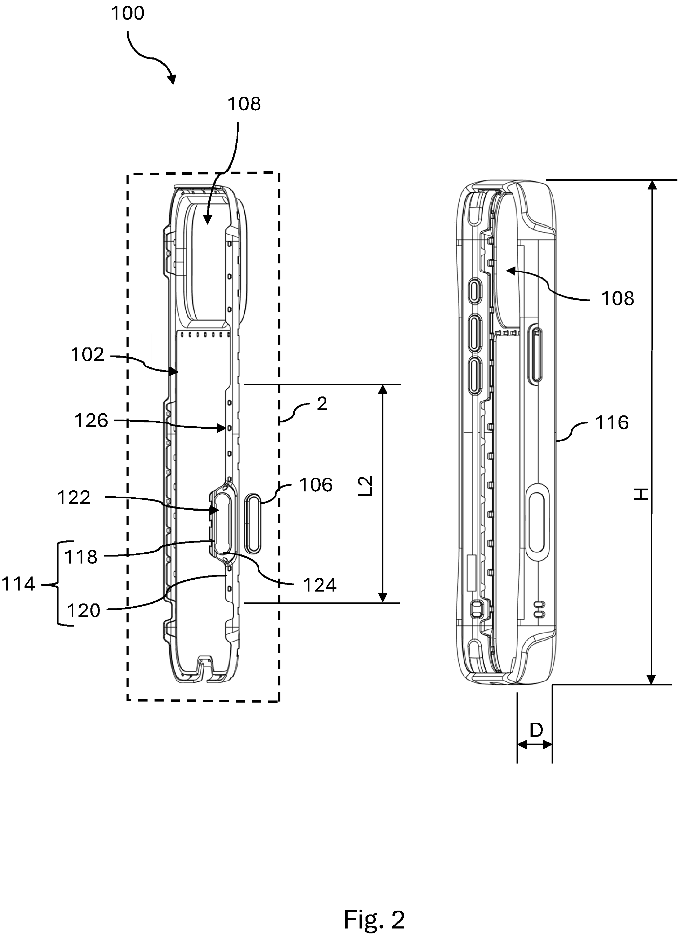

An example system 1 is shown in Figure 1. The system 1 comprises a mobile device 10, in this example a mobile telephone 10, and a case 100 for the mobile device 10, the case 100 according to an example. The case 100 encloses the mobile device 10 around a rear face and sides of the mobile device 10, as will be described in more detail herein after. The case 100 is shown in more detail in Figures 2 to 5.

The case 100 has a rear cover 102, a flange 104, and a mobile-device-interface control panel 106 operable by a user from an exterior of the case 100. The mobile device 10 comprises a button (not shown) disposed on a side of the mobile device 10, around a third of a distance along the side of the mobile device 10. To allow use of the button when the mobile device 10 is in the case 100, the mobile-device-interface control panel 106 overlies the button and is configured such that provision of an input to the mobile-device-interface control panel 106 from an exterior of the case 100 causes a corresponding input to the button. The button is configured to receive different inputs, corresponding to respective actions to be taken by the mobile device 10. Accordingly, accurate positioning of the mobile-device-interface control panel 106 relative to the button is required, to ensure that the correct input is detected by the mobile device 10.

The rear cover 102 and the flange 104 together define an interior 101 of the case 100, in which the mobile device 10 is receivable. With the mobile device 10 in the interior 101 of the case 100, the rear cover 102 overlies the rear face of the mobile device 10, and the flange 104 overlies the sides of the mobile device 10. The case 100 is arranged to reduce wear and tear on the mobile device 10, for example by providing impact and scratch resistance and inhibiting ingress of contaminants. It will be appreciated that in other examples, the rear cover 102 may partially overlie the rear face of the mobile device 10. For example, the case 100 may be a bumper style case, and the rear cover 102 may form a lip around a periphery of the rear face of the mobile device 10. It will be appreciated that in other examples, the rear cover 102 may at least partially overlie plural rear faces of the mobile device 10, such as in examples in which the mobile device 10 is foldable.

The rear cover 102, which may be referred to as a rear portion 102, is generally of a corresponding shape to the rear face of the mobile device 10, which in this example is generally rectangular and planar. The rear cover 102 lies in a first plane 2 defined by a height H and width W of the case 100. The width W is smaller than the height H. In this example, the rear cover 102 defines a single aperture 108 therethrough, to expose emitters and sensors, such as camera-related features, on the rear face of the mobile device 10 to an external environment. It will be appreciated that a different number, size and/or position of apertures may be present in other examples, for example in cases for other mobile device models.

The rear cover 102 is formed from a polycarbonate (PC) and provides a stiff shell across the rear face of the mobile device, helping to maintain a desired shape of the case 100 over time.

The flange 104 depends from, and is generally perpendicularly to, the rear cover 102, and extends around a complete periphery of the rear cover 102. The flange 104 comprises four side portions 110a-d, each of which extends along, and depends from, a respective side of the rear cover 102, and is generally perpendicular to the first plane 2. The flange 104 defines a depth D of the case 100. The depth D is perpendicular to, and smaller than, both the height H and the width W.

A first side portion 110a of the four side portions 110a-d lies in a second plane 3, orthogonal to the first plane 1, and overlies the side of the mobile device 10 on which the button is disposed. The second plane 3 is defined by the height H and the depth D of the case 100. The first side portion 110a also constrains the mobile-device-interface control panel 106 relative to the rear cover 102. The first side portion 110a comprises a first side portion part 114 and a second side portion part 116. The first side portion part 114 is unitary with the rear cover 102, and is made from PC and is relatively stiff compared to the second side portion part 116. The second side portion part 116 has been over-moulded onto the first side portion part 114, so that the second side portion part 116 is fixed to the first side portion part 114 in an adhesive-free manner.

The first side portion part 114 comprises a frame 118 configured to receive and retain the mobile-device-interface control panel 106, and a frame support 120. The frame support 120 is integral with the rear cover 102 of the case 100 and the frame 118. Accordingly, the frame 118 is non-adhesively retained in position relative to the rear cover 102 by the frame support 120, by virtue of the relatively stiff material from which the rear cover 102, frame support 120 and frame 118 are formed.

The frame 118 defines a hole 122 through the first side portion 110a, which is obround in shape and extends from the interior 101 of the case 100 to the exterior of the case 100. The frame 118 comprises a frame flange 124 extending around a periphery of the hole 122 and having a thickness T1 that is less than a thickness of a remainder of the frame 118. An inner surface of the frame flange 124, facing toward the interior 101 of the case 100, defines a stop around the periphery of the hole 122. It will be appreciated that in other examples, the frame flange 124 may be non-continuous, for example being defined by one or more projections that extend towards each other in the hole 122.

The frame 118 has a length L1, in the direction of the height H of the case 100, that extends only partially along a full extent of the side portion 110a. In this example, the length L1 of the frame 118 is around a quarter of the full extent of the first side portion 110a. The frame support 120 has a length L2, in the direction of the height H of the case, that is greater than the length L1 of the frame 118. In this example, the length L2 of the frame support 120 is around two thirds of the full extent of the first side portion 110a. A portion of the frame 118 that is most-distal from the first plane 2 defines a maximum distance of the first side portion part from the first plane 2, in a direction of the depth D of the case 100.

The frame support 120 comprises a plurality of first dovetails 140 extending outward from a free edge of the frame 118. The free edge is a most-distal portion of the frame 118 from the rear cover 102. The second side portion part 116 is overmoulded onto the frame support 120, and comprises second dovetails (not visible) that are interlocked with the first dovetails 140. Together, the first and second dovetails help to join the first and second side portion parts 114, 116 by providing a greater contact surface area between the first and second side portion parts 114, 116.

The frame support 120 defines six fixing holes 126 extending therethrough, and positioned above and below the frame 118, in the direction of the height H of the case 100, in this example. The second side portion part 116, having been over-moulded onto the frame support 120, covers the fixing holes 126 at both ends of the fixing hole 126, and comprises a corresponding six shafts (not shown) that each extend through a respective one of the fixing holes 126 and are integral with a remainder of the second side portion part 116. Together, the six fixing holes 126 and corresponding six shafts interlock the first and second side portion parts 114, 116 to one another. It will be appreciated that a different number and/or position of the fixing holes, and thus the shafts, may be provided in other examples.

The first side portion part 114 defines a frame region of the first side portion 110a and the second side portion part 116 defines a non-frame region, which is less stiff than the frame region. The second side portion part 116 has a greater area than the first side portion part 114, and thus extends over a greater proportion of the first side portion 110a than the first side portion part 114.

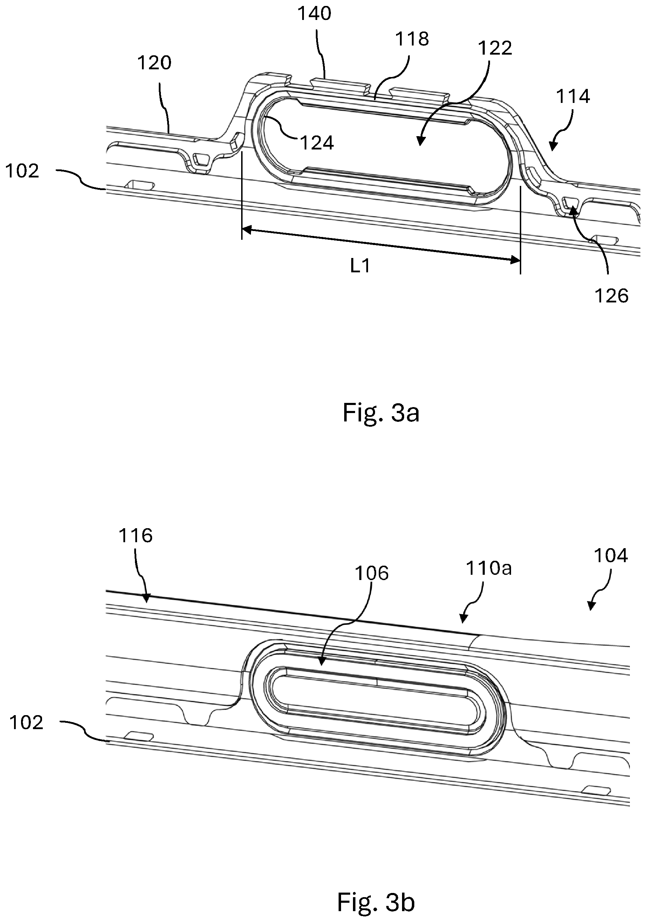

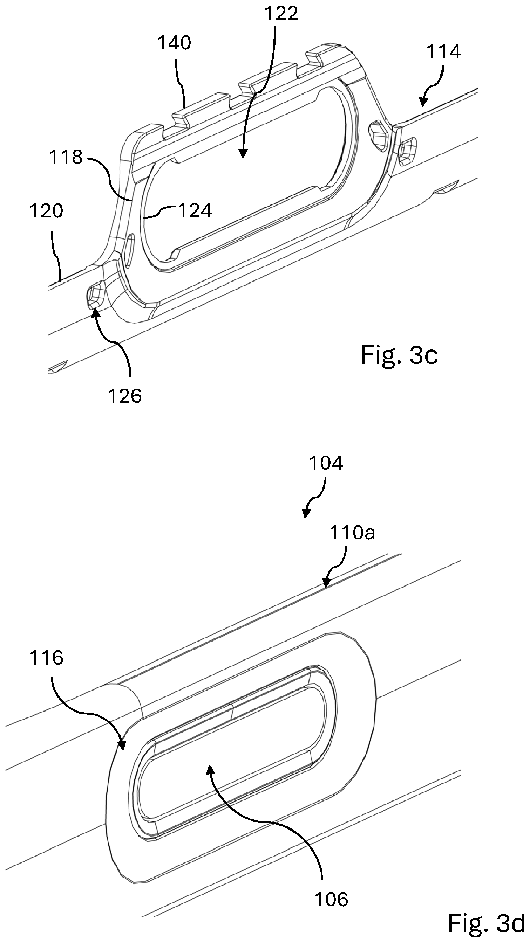

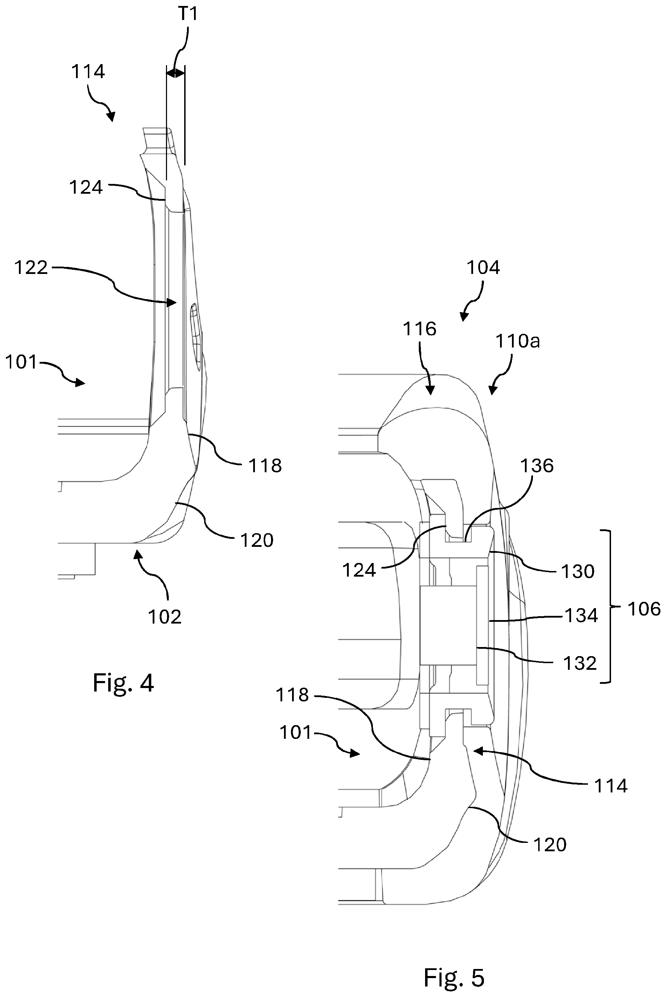

The second side portion part 116 is formed from thermoplastic polyurethane (TPU), which has a lower Young's modulus than PC. The remaining side portions 110b-d are also formed from TPU in this example, and are integral with the second side portion part 116. The second side portion part 116 is over-moulded onto the rear cover 102 around a periphery of the rear cover 102. As mentioned previously, the second side portion part 116 is also over-moulded onto the first side portion part 114, so that the second side portion part 116 encapsulates the frame 118 around a periphery of the hole 122, and the frame support 120, along a complete length L1, L2 of the frame 118 and the frame support 120. That is, the second side portion part 116 covers the free edge, an inner surface and an outer surface of the frame 118 and the frame support 120. The inner surface faces towards the interior 101 of the case 100 and the outer surface faces towards the exterior of the case 100. Accordingly, a section of the second side portion part 116 that is most-distal from the first plane 2, in a direction of the depth D of the case 100, is more distal from the first plane 2 than any section of the first side portion part 114. The second side portion part 116 also extends around a complete periphery of the hole 122 on the outer surface of the frame 118, as best shown in Figure 3d, and above and below the frame 118, in the direction of the height H of the case 100. As will be described hereinafter, this helps to protect the mobile-device-interface control panel 106 at an exterior of the case 100. The flange 124 is unencapsulated by the second side portion part 116, as best shown in Figure 5.

The mobile-device-interface control panel 106 comprises a housing 130, a PCB 132, and a user interface 134. The user interface 134 is formed from sapphire crystal and acts as a protective layer over the PCB 132. The user interface 134 is operable by a user to provide an input to the PCB 132. The PCB 132 is moveable and/or deformable to transmit mechanical actuation of the user interface 134 to the button on the mobile device 10. The PCB 132 also transmits changes in capacitance at the user interface 134, such as caused by a swipe of a finger of the user across the user interface 134, to the button on the mobile device 10. For example, the PCB may comprise a conductive layer. In this way, the PCB 132 may provide a mechanical and capacitive connection between the user interface 134 and the button on the mobile device 10.

The housing 130 holds the PCB 132 and user interface 134 in place relative to one another. The user interface 134 defines an exterior-facing surface of the mobile-device-interface control panel 106. The housing 130 comprises an outer groove 136 which extends around a periphery of the user interface 134. The outer groove 136 receives the frame flange 124 to provide a snap fit arrangement between the mobile-device-interface control panel 106 and the frame 118, which stops the mobile-device-interface control panel 106 from passing through the hole 122 and thus holds the mobile-device-interface control panel 106 in position relative to the frame 118. At this position, the user interface 124 is exposed to the exterior of the case 100 via the hole 122, protecting the PCB 132 from an environment exterior to the case 100, and the PCB 132 is in communication with the interior 101 of the case 100. The housing 130 is mechanically held within the hole 122 by way of the mating arrangement of the outer groove 136 and the frame flange 124. Accordingly, the mobile-device-interface control panel 106 is non-adhesively held in place relative to the first side portion 110a.

In use of the mobile device 10 when attached to the case 100, a user may provide inputs at the user interface 134 to control the mobile device 10 via the button. In this example, the user interface 134 may be pressed upon to input a first command, and swiped along a length of the user interface 132 to input a second command. The PCB 132 is configured to input a corresponding command to the button.

The provision of the first side portion part 114 inhibits warping of the first side portion 110a during manufacture of the case 100, or as a result of use of the user interface 134 and/or impact force on the case 100. This helps to maintain the integrity of the user interface 134 and the PCT 132, and a position of the mobile-device-interface control panel 106 relative to the button and the rear cover 102. Provision of the second side portion part 116, which is less stiff than the first side portion part 114, helps to cushion a remainder of the respective side of the mobile device 10 to provide improves impact protection compared to a stiffer side portion.

In another example, the mobile-device-interface control panel 106 and the frame 118 may, additionally or alternatively to the snap fit arrangement, be held in place relative to one another by a friction or interference fit.

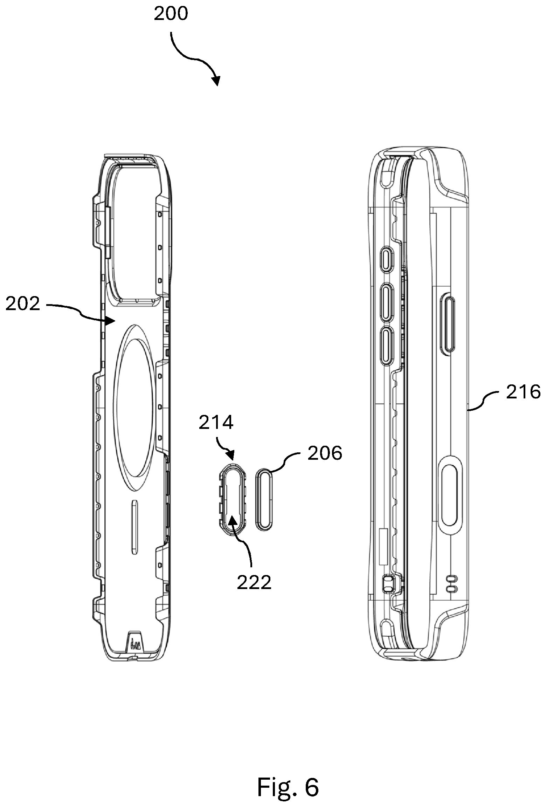

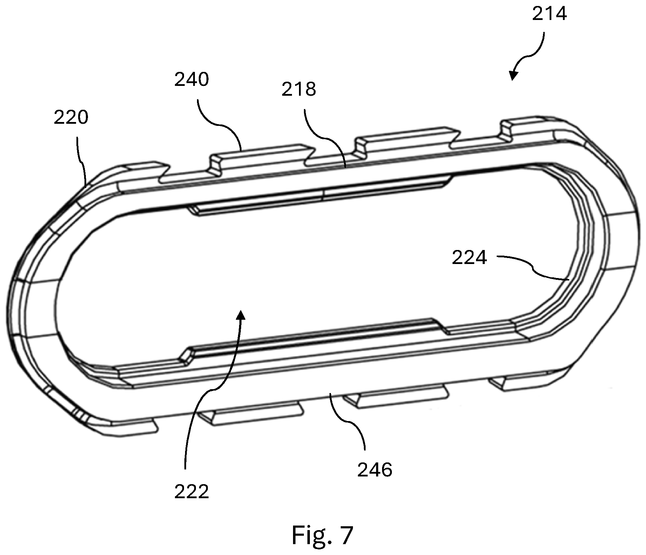

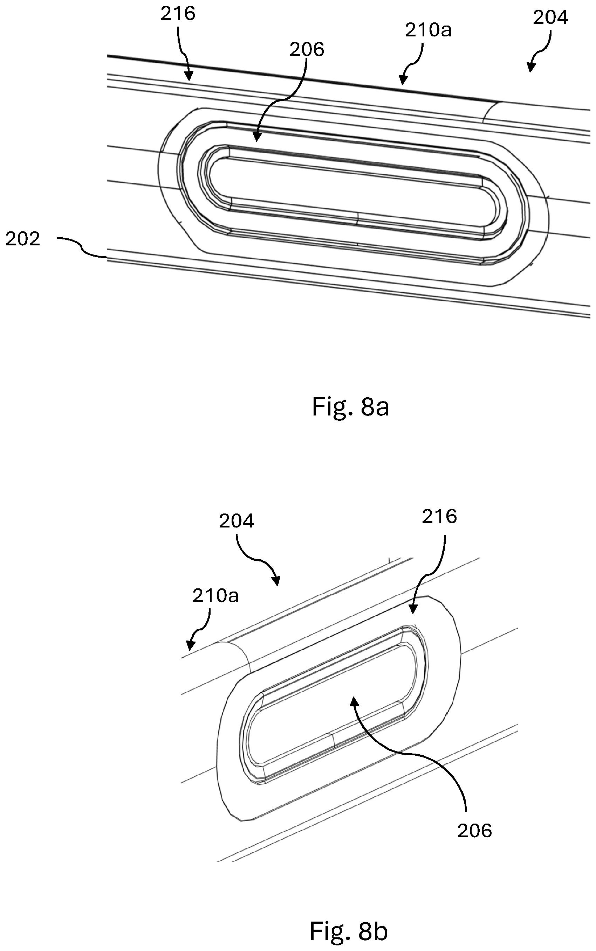

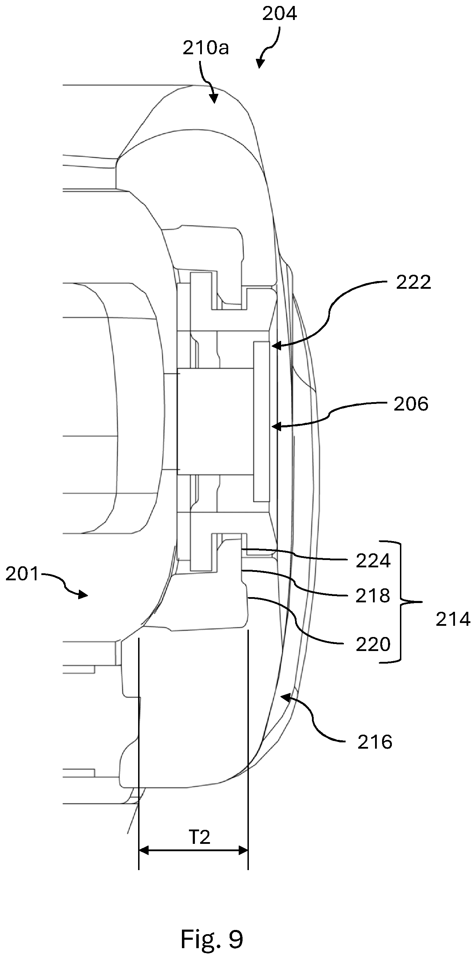

Figures 6 to 9 show another case 200 according to an example. The case 200 is similar to the case 100 described with reference to Figures 1 to 5, and like components have the same reference number but increased by 100. The case 200 has a rear cover 202, a flange 204 and a mobile-device-interface control panel 206 operable by a user from an exterior of the case 200, and is for the same mobile device 10 as shown in Figure 1. The mobile-device-interface control panel 206 is the same as the mobile-device-interface control panel 106 described above with reference to Figures 1 to 5 and is not described again in detail, for brevity.

The case 200 differs from the case 100 described with reference to Figures 1 to 5 in that the first side portion part 214 is nonunitary with the rear cover 202. More specifically, the frame support 220 of the first side portion part 214 of the first side portion 210a is not integral with the rear cover 202. Accordingly, the first side portion part 214 is separated from the rear cover 202 by the second side portion part 216. The first side portion part 214 being nonunitary with the rear cover 202 means that a greater proportion of the first side portion 210a is formed by the less stiff second side portion part 216 than in the case 100 described with reference to Figures 1 to 5. In turn, the first side portion 210a may better absorb energy when subjected to an impact during use of the case 200.

In this example, the frame support 220 is integral with, and extends around a periphery of, the frame 218. The frame support 220 comprises a plurality of first dovetails 240 extending outward from the frame 218.

The first side portion part 214 has a maximum thickness T2 extending between an inner surface and an outer surface. The first dovetails 240 have a thickness that is less than the maximum thickness T2, and are set back from the inner surface and the outer surface.

The second side portion part 216 is overmoulded onto the frame support 220, and comprises second dovetails 246 that are interlocked with the first dovetails 240. Together, the first and second dovetails help to join the first and second side portion parts 214, 216 by providing a greater contact surface area between the first and second side portion parts 214, 216.

The second side portion part 216 is flush with the inner surface and the outer surface of the first side portion part 214, thus encapsulating the first dovetails 240 inward and outward, with respect to the interior 201 of the case 200, of the first dovetails 240. The second side portion part 216 is not over-moulded onto the frame 218 such that the frame is not encapsulated by the second side portion part 216.

The mobile-device-interface control panel 206 fits within the frame 214 in the same manner as described with reference to Figures 1 to 5, but may be via any suitable adhesive-free mechanism in other examples.

It will be appreciated that the cases 100, 200 described herein may be provided as a kit of parts, for example comprising the rear cover and flange as an integral part and the mobile-device-interface control panel as a separate part locatable, by a user, in the hole defined within the first side portion of the flange. For a kit of parts comprising one of the cases 100, 200 described above, the user would be required to push the mobile-device-interface control panel into the hole of the frame, from the interior of the case, until the housing of the mobile-device-interface control panel contacts the inner surface of the flange disposed around the periphery of the hole. In other examples, the mobile-device-interface control panel may already be installed within the frame. In some examples, the kit of parts may include the mobile device, attached to or separate from the case.

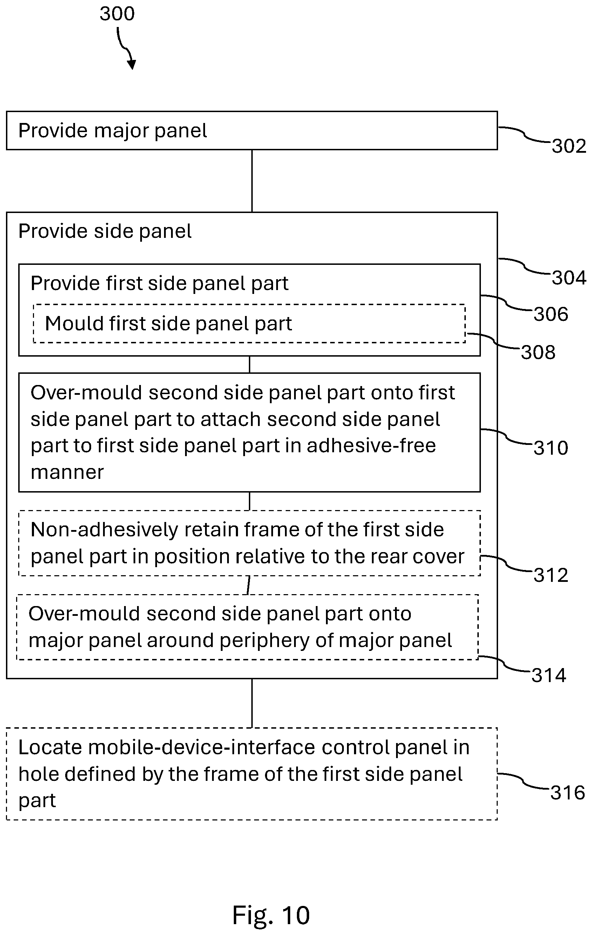

Figure 10 shows a method 300 according to an example. Those blocks shown in dashed lines are features of the method 300 that may be omitted in other examples according to the disclosure. The method 300 is for manufacturing a case for a mobile device, such as either of the cases 100, 200 described above or another case according to the disclosure. The case has a height, a width that is perpendicular to the height, and a depth that is perpendicular to, and smaller than, both the height and the width. In the examples disclosed herein, the width is smaller than the height.

The method 300 comprises providing a rear cover, or rear portion 302, that lies in a first plane defined by the height and the width. The rear portion is configured to at least partially overlie a rear of the mobile device when the case is attached to the mobile device.

The method 300 also comprises providing a side portion 304 that depends from the rear portion and lies in a second plane defined by the depth and one of the height and the width. The side portion is configured to at least partially overlie a side of the mobile device when the case is attached to the mobile device.

Providing the side portion 304 comprises providing a first side portion part 306, in this example by moulding 308 the first side portion part, that comprises a frame defining a hole therein that opens to an exterior of the first side portion part. The first side portion part is unitary with the rear portion in this example, but may be nonunitary with, and separated from, the rear portion in other examples.

Providing the side portion 304 also comprises over-moulding a second side portion part onto the first side portion part 310 so that the second side portion part is non-adhesively attached to the first side portion part, and non-adhesively retaining the frame in position relative to the rear cover 312 by at least one of the first side portion part and the second side portion part.

Providing the side portion 304 also comprises over-moulding the second side portion part onto the rear portion 314 around a periphery of the rear portion. The rear portion is stiffer than the second side portion part. The rear portion is formed from PC, and the second side portion part is formed from TPU having a lesser Young's Modulus than the PC of the rear portion. Since the first side portion part is unitary with the rear portion in this example, the first side portion part is stiffer than the second side portion part.

A first side region of the side portion on a first side of the frame, in the direction of the one of the height and the width, is less stiff than a frame region of the side portion that comprises the frame. A second side region of the side portion on a second side of the frame, in the direction of the one of the height and the width, is less stiff than the frame region of the side portion.

In this example, the side portion is provided so that: the frame extends only partially along a full extent of the side portion in the direction of the one of the height and the width, a portion of the frame is located further from the first plane than is any section of the first side portion part present in the first side region; and the second side portion part extends over a greater proportion of the side portion than does the first side portion part. The frame, in this example, extends around a quarter of the full extent of the side portion in the direction of the one of the height and the width. The portion of the frame is located further from the first plane than is any section of the first side portion part present in the second side region.

The method 300 further comprises locating a mobile-device-interface control panel in the hole defined by the frame 316, to retain the mobile-device-interface control panel in the hole non-adhesively. The mobile-device-interface control panel is exposed at an exterior of the case and configured to be operable by a user to control a mobile device interface of the mobile device when the case is attached to the mobile device. The mobile-device-interface control panel may be of a construction as described above with reference to Figures 1 to 5.

Although not shown in this example, methods according to examples can comprise providing, for example by moulding, a plurality of side portions that depend from the rear portion and are configured to at least partially overlie respective sides of the mobile device when the case is attached to the mobile device, wherein the side portion is one of the plurality of side portions.

Although not shown in this example, methods according to examples can comprise providing, for example by moulding, additional retention features of the first and/or second side portion parts. Such retention features may be for bonding the first side portion part to the second side portion part and/or for retaining an object within the hole of the frame of the first side portion part, for example a mobile-device-interface control panel.

The cases 100, 200 and method 300 described herein provide a relatively stiff frame for retaining a mobile-device-interface control panel non-adhesively. Avoiding the use of adhesive between the frame and mobile-device-interface control panel simplifies and speeds up assembly of the case, and makes disassembly of the case easier too, to help with recycling the case. Overmoulding of the frame and/or the frame support with a less stiff material to provide a side portion of the case maintains the impact-protection performance of the case, and again avoids the use of adhesive.

The examples described above are illustrative of the present disclosure, and further examples are envisaged. It is to be understood that any feature described in relation to any one example may be used alone or in combination with other features of the example, and may also be used in combination with one or more features of any other of the examples, or any combination of any other of the examples. Furthermore, equivalents and modifications not described above may also be employed without departing from the scope of the disclosure, which is defined in the accompanying claims.

## Claims

1. A case for a mobile device, the case having a height, a width that is perpendicular to the height, and a depth that is perpendicular to, and smaller than, both the height and the width, wherein the case comprises:
a rear portion that lies in a first plane defined by the height and the width, wherein the rear portion is configured to at least partially overlie a rear of the mobile device when the case is attached to the mobile device; and
a side portion that depends from the rear portion and lies in a second plane defined by the depth and one of the height and the width, wherein the side portion is configured to at least partially overlie a side of the mobile device when the case is attached to the mobile device;
wherein the side portion comprises a first side portion part and a second side portion part that has been over-moulded onto the first side portion part so that the second side portion part is fixed to the first side portion part;
wherein the first side portion part is stiffer than the second side portion part and comprises a frame defining a hole in the first side portion part that opens to an exterior of the first side portion part, wherein the frame is non-adhesively retained in position relative to the rear portion by at least one of the first side portion part and the second side portion part; and
a first side region of the side portion on a first side of the frame, in the direction of the one of the height and the width, is less stiff than a frame region of the side portion that comprises the frame.

2. The case of claim 1, wherein the frame extends only partially along a full extent of the side portion in the direction of the one of the height and the width, and a portion of the frame is located further from the first plane than is any section of the first side portion part.

3. The case of claim 1 or claim 2, wherein a second side region of the side portion on a second side of the frame, in the direction of the one of the height and the width, is less stiff than the frame region of the side portion.

4. The case of both claims 2 and 3, wherein the portion of the frame is located further from the first plane than is any section of the first side portion part present in the second side region.

5. The case of any one of claims 1 to 4, wherein the second side portion part extends over a greater proportion of the side portion than does the first side portion part, and/or
wherein the case comprises a through hole that extends through the side portion from an interior of the case to an environment external to the case, wherein the through hole comprises, or consists of, the hole defined by the frame of the first side portion part, wherein the interior of the case is at least partially defined by the rear portion and the side portion, and wherein the environment external to the case is on an opposite side of the side portion from the interior of the case.

6. The case of any one of claims 1 to 5, wherein the second side portion part is over-moulded on to the rear portion around a periphery of the rear portion, and the rear portion is stiffer than the second side portion part.

7. The case of claim 6, wherein the first side portion part is nonunitary with the rear portion, and optionally,
wherein the first side portion part is separated from the rear portion by material of the second side portion part.

8. The case of any one of claims 1 to 7, wherein the first side portion part defines one or more first dovetails, and wherein the second side portion part defines one or more second dovetails interlocked respectively with the one or more first dovetails, and/or
wherein a wall of the hole comprises at least two projections of the first side portion part that project towards each other in the hole for mechanically retaining something in the hole, wherein the projections are unencapsulated by the second side portion part.

9. The case of any one of claims 1 to 8, wherein the second side portion part is attached to the first side portion part in an adhesive-free manner.

10. The case of any one of claims 1 to 9, comprising a mobile-device-interface control panel in the hole defined by the frame, wherein the mobile-device-interface control panel is exposed at an exterior of the case and configured to be operable by a user to control a mobile device interface of the mobile device when the case is attached to the mobile device.

11. A kit of parts comprising:
the case of any one of claims 1 to 9; and
a mobile-device-interface control panel that is separate from the case and locatable in the hole defined by the frame;
wherein the mobile-device-interface control panel is configured to be exposed at an exterior of the case and operable by a user to control a mobile device interface of the mobile device when the mobile-device-interface control panel is in the hole and the case is attached to the mobile device.

12. The case of claim 10, or the kit of parts of claim 11, wherein the mobile-device-interface control panel and the side portion are configured so that the mobile-device-interface control panel is held in the hole by way of a friction fit or a snap fit between the mobile-device-interface control panel and the side portion, and/or
wherein the mobile-device-interface control panel comprises a printed circuit board and a protective layer that overlies the printed circuit board, wherein the mobile-device-interface control panel and the side portion are configured so that, when the mobile-device-interface control panel is in the hole and the case is attached to the mobile device, the protective layer isolates the printed circuit board from an environment external to the case.

13. A system comprising:
the case of claim 10, or the kit of parts of claim 11 or claim 12; and
the mobile device.

14. A method of manufacturing a case for a mobile device, the case having a height, a width that is perpendicular to the height, and a depth that is perpendicular to, and smaller than, both the height and the width, wherein the method comprises:
providing a rear portion that lies in a first plane defined by the height and the width, wherein the rear portion is configured to at least partially overlie a rear of the mobile device when the case is attached to the mobile device;
providing a side portion that depends from the rear portion and lies in a second plane defined by the depth and one of the height and the width, wherein the side portion is configured to at least partially overlie a side of the mobile device when the case is attached to the mobile device;
wherein the providing the side portion comprises:
providing a first side portion part that comprises a frame defining a hole therein that opens to an exterior of the first side portion part;
over-moulding a second side portion part onto the first side portion part so that the second side portion part is fixed to the first side portion part, wherein the first side portion part is stiffer than the second side portion part;
non-adhesively retaining the frame in position relative to the rear portion by at least one of the first side portion part and the second side portion part; and
providing that a first side region of the side portion on a first side of the frame, in the direction of the one of the height and the width, is less stiff than a frame region of the side portion that comprises the frame.

15. The method of claim 14, comprising locating a mobile-device-interface control panel in the hole defined by the frame, wherein the mobile-device-interface control panel is exposed at an exterior of the case and configured to be operable by a user to control a mobile device interface of the mobile device when the case is attached to the mobile device.
